Europäisches Patentamt

European Patent Office

Office européen des brevets

(19)

(11) EP 1 311 094 A2

## (12) EUROPEAN PATENT APPLICATION

(43) Date of publication:
14.05.2003 Bulletin 2003/20

(51) Int Cl.7: H04L 25/03, H04B 7/06

(21) Application number: 02024914.0

(22) Date of filing: 06.11.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 08.11.2001 JP 2001343535

(71) Applicant: NTT DoCoMo, Inc.
Tokyo 100-6150 (JP)

(72) Inventor: Denno, Satoshi, Int.Prop.Dpt.,
NTT DoCoMo, Inc.
Chiyoda-ku, Tokyo (JP)

(74) Representative: HOFFMANN - EITLE
Patent- und Rechtsanwälte
Arabellastrasse 4
81925 München (DE)

## (54) Calculation and transmission of coefficients for beamforming or equalisation

(57) The communication system carries out signal processing adapted for transmission-channel characteristics. In the communication system, a right transmitter detects a transmission-signal-characteristics-correcting coefficient ($W_t$) sent from a left receiver and corrects, according to the transmission-signal-characteristics-correcting coefficient ($W_t$), at least one of a transfer function and a spatial frequency characteristic of a transmission signal. The left receiver computes the transmission-signal-characteristics-correcting coefficient ($W_t$) and a reception-signal-characteristics-correcting coefficient ($W_r$) through the processes of detecting correlation of a reception signal, and carrying out eigenvalue decomposition on a product matrix obtained by multiplying a correlation matrix having the detected correlation as elements and a transported matrix of the correlation matrix together. According to the reception-signal-characteristics-correcting coefficient ($W_r$), the left receiver corrects at least one of a frequency characteristic and a spatial frequency characteristic of the reception signal. The left receiver transmits the transmission-signal-characteristics-correcting coefficient ($W_t$) to the right transmitter, so that the right transmitter may correct at least one of a transfer function and a spatial frequency characteristics of a transmission signal according to the transmission-signal-characteristics-correcting coefficient ($W_t$).

FIG.10

Printed by Jouve, 75001 PARIS (FR)

EP 1 311 094 A2

# EP 1 311 094 A2

**Description**

BACKGROUND OF THE INVENTION

1. Field of the Invention

The present invention relates to communication methods, communication systems, transmitters, and receivers, to carry out adaptive signal transmission and reception processes.

2. Description of the Related Art

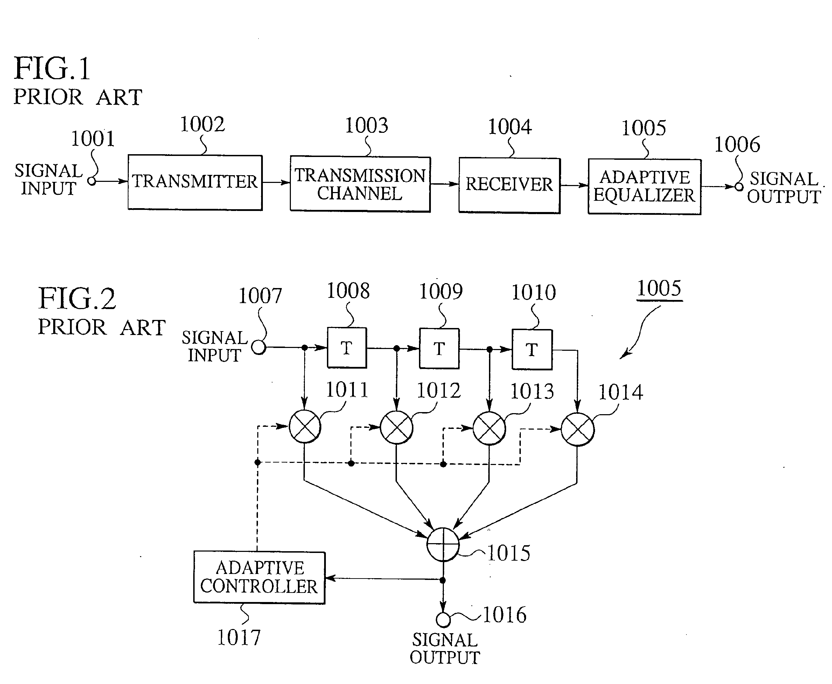

A communication system usually compensates the characteristics of a transmission channel on a reception side or on a transmission side. Fig.1 shows an example of a communication system employing an adaptive equalizer to compensate a delay spread occurring in a transmission channel. The system includes a transmit information input terminal 1001, a transmitter 1002, a transmission channel 1003, a receiver 1004, the adaptive equalizer 1005, and a demodulated signal output terminal 1006.

Fig.2 shows an example of the adaptive equalizer 1005. The adaptive equalizer 1005 includes a signal input terminal 1007, delay elements 1008 to 1010, multipliers 1011 to 1014, an adder 1015, a signal output terminal 1016, and an adaptive controller 1017.

The adaptive controller 1017 estimates a coefficient applied as another input signal to each of the multipliers 1011 to 1014. The adaptive controller 1017 employs, for example, an LMS (least mean square) algorithm to minimize an ISI (intersymbol interference) component of an output signal provided from the output terminal 1016.

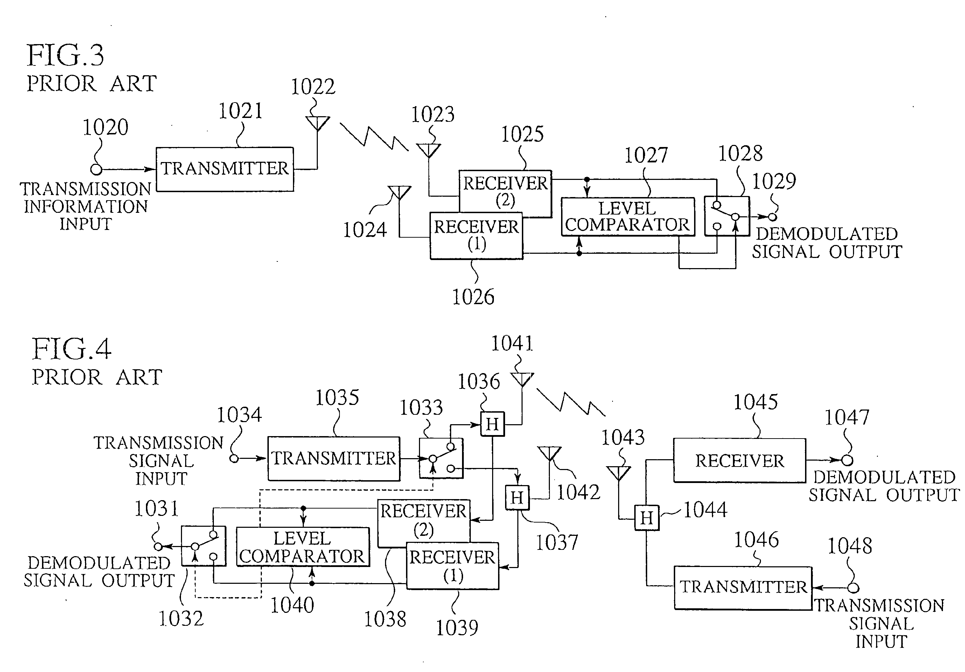

Fig. 3 shows an example of a wireless communication system employing a post-detection selection combining diversity reception method that uses a plurality of antennas to receive signals, demodulates only a signal from one of the antennas that provides a highest reception quality, and outputs the demodulated signal. The system includes a transmit information input terminal 1020, a transmitter 1021, antennas 1022 to 1024, receivers 1025 and 1026, a level comparator 1027, a switching circuit 1028, and a demodulated signal output terminal 1029.

In Fig.3, the transmitter 1021 transmits a radio signal from the antenna 1022. The transmitted signal is received by the antennas 1023 and 1024. Levels of the reception signals from the antennas are compared with each other in the level comparator 1027. One of the antennas providing a higher signal level is selected by the switching circuit 1028, and the signal from the selected antenna is output through the output terminal 1029. It can be said that the system weights signals received by the antennas 1023 and 1024 with "1" and "0" according to levels of the reception signals.

Fig.4 shows an example of a transmission-diversity reception system, which oppositely operates to the diversity reception system of Fig.3. The system of Fig.4 employs a plurality of antennas on a transmission side, to transmit a signal only from one of the antennas that may provide a highest reception level. The system includes transmission signal input terminals 1034 and 1048, transmitters 1035 and 1046, receivers 1038, 1039, and 1045, switching circuits 1032 and 1033, antenna sharing units 1036, 1037, and 1044 for transmission and reception, antennas 1041 to 1043, demodulated signal output terminals 1031 and 1047, and a level comparator 1040.

In Fig.4, the transmitter 1046 transmits a signal. The signal is received by the antennas 1041 and 1042, which send the reception signals to the receivers 1038 and 1039, respectively. Levels of the reception signals are compared with each other in the level comparator 1040. One of the reception signals having a higher level is selected by the switching circuit 1032 and is demodulated. When the transmitter 1035 transmits a signal according to data input to the input terminal 1034, the switching circuit 1033 selects the antenna chosen by the level comparator 1040 so that the signal may be transmitted through the selected antenna. The transmitted signal is received by the antenna 1043 and is demodulated by the receiver 1045. The demodulated signal is output from the output terminal 1047.

This system transmits a signal with the antenna that can receive a signal at a highest level. Due to the reversibility of a transmission channel, the signal transmitted by the antenna that can receive a signal at the highest level can be received by the receiver at a highest level compared with when the same signal is transmitted through any other antenna. The system, therefore, improves communication quality. It can be said that the system of Fig.4 carries out the diversity reception of Fig.3 on a transmission side, too.

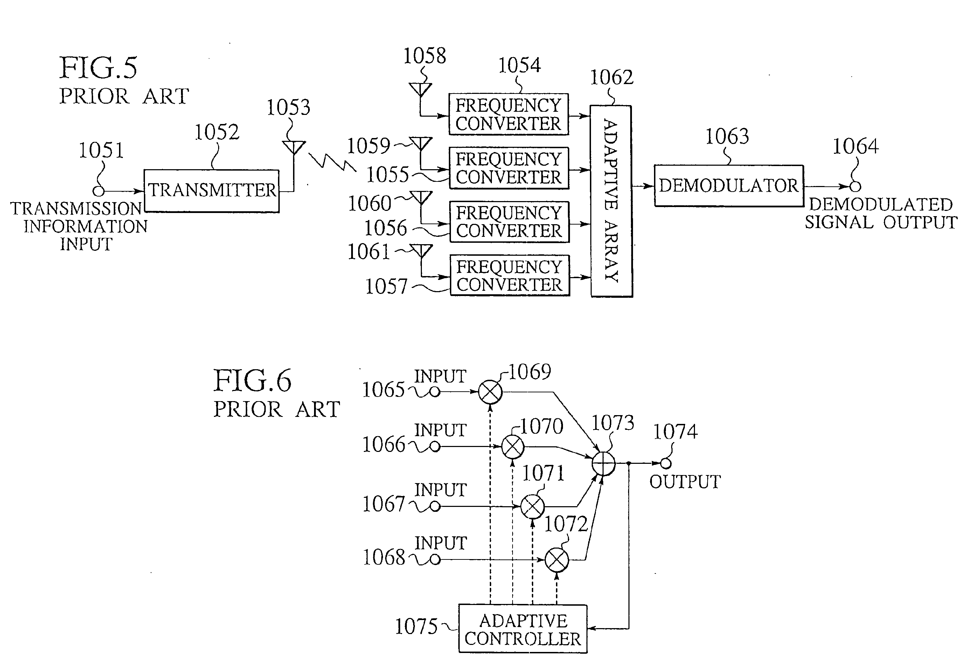

Fig.5 shows an example of an intelligent communication system employing an adaptive array. The system includes a transmit information input terminal 1051, a transmitter 1052, antennas 1053 and 1058 to 1061, frequency converters 1054 to 1057, the adaptive array 1062, a demodulator 1063, and a demodulated signal output terminal 1064.

Fig.6 shows an example of the adaptive array 1062. The adaptive array 1062 includes signal input terminals 1065 to 1068, multipliers 1069 to 1072, an adder 1073, a signal output terminal 1074, and an adaptive controller 1075. The adaptive controller 1075 determines coefficients applied as other input signals to the multipliers 1069 to 1072, respectively. Like the adaptive controller 1017 of the adaptive equalizer 1005 of Figs.1 and 2, the adaptive controller 1075 controls the coefficients applied to the multipliers 1069 to 1072 according to an LMS algorithm to optimize the SNR of a transmission signal provided from the output terminal 1074.

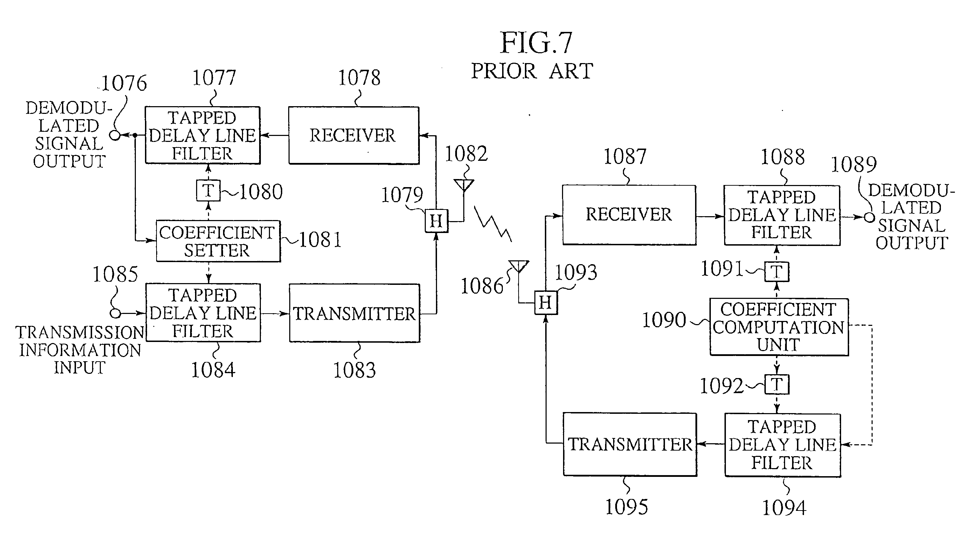

The related arts explained above carry out equalization only on a transmission side or on a reception side. There are communication systems that carry out equalization both on transmission and reception sides. Fig.7 shows an example of such dual equalization communication systems. The system includes demodulated signal output terminals 1076 and 1089, a transmit information input terminal 1085, tapped delay line filters 1077, 1088, 1084, and 1094, receivers 1078 and 1087, transmitters 1083 and 1095, antenna sharing units 1079 and 1093, antennas 1082 and 1086, a coefficient computation unit 1090 to estimate coefficients for the tapped delay line filters, delay elements 1080, 1091, and 1092, and a coefficient setter 1081. Coefficients for the tapped delay line filters 1077 and 1084 are computed by the coefficient computation unit 1090 and are transmitted through the transmitter 1095 and antenna 1086. The transmitted coefficients are received by the antenna 1082, are demodulated by the receiver 1078, and are output from the tapped delay line filter 1077. From the tapped delay line filter 1077, the coefficient setter 1081 fetches the coefficients and sets them for the tapped delay line filters 1077 and 1084, respectively.

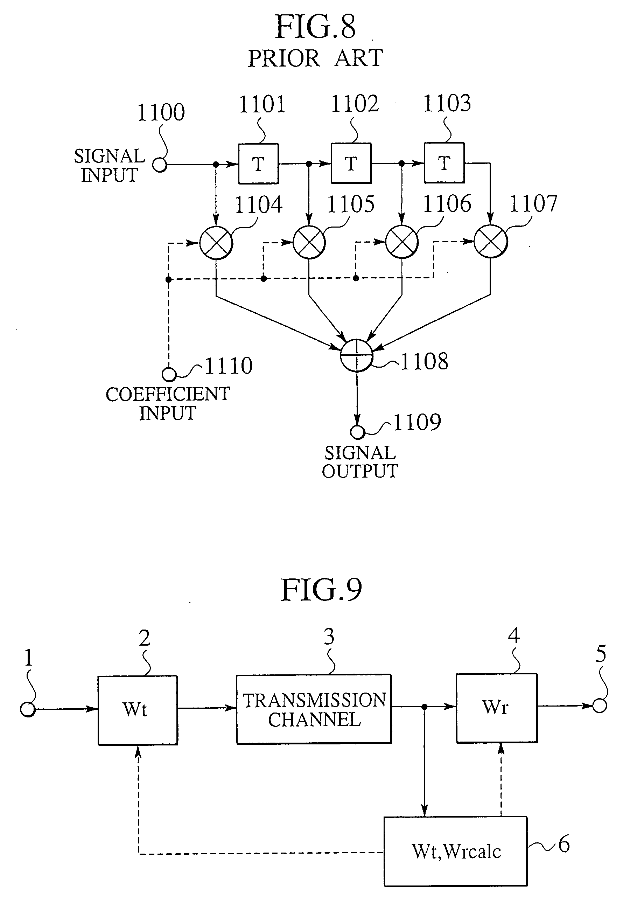

Fig.8 shows an example of one of the tapped delay line filters. The tapped delay line filter includes a signal input terminal 1100, delay elements 1101 to 1103, multipliers 1104 to 1107, an adder 1108, a signal output terminal 1109, and a coefficient input terminal 1110. A tapped delay line filter on a transmission side has a tap coefficient $w_t$ and a tapped delay line filter on a reception side has a tap coefficient $w_r$. Time is represented with "$t$", a transmit information signal vector with "$s(t)$," a reception signal with "$y(t)$," and received power with "$<|y(t)|^2>$." The received power serves as an evaluation factor, which must be maximized. When the received power is maximized, the tapped delay line filters on the transmission and reception sides form matched filters. The average power $<|y(t)|^2>$ will indefinitely increase if the coefficients $w_t$ and $w_r$ are indefinitely increased. To constrict this, the following restrictive condition is set:

$$w_t^T w_t^* = 1, \quad w_r^T w_r^* = 1, \quad \left\langle s^*(t) s(t) \right\rangle = I \qquad \cdots (1)$$

where $I$ is a unit matrix.

Ignoring the influence of noise, the reception signal $y(t)$ is expressed as follows:

$$y(t) = w_t^T x(t) = w_t^T \left( A w_r s(t) \right)$$
$$= w_t^T A w_r s(t) = s^T(t) w_r^T A^T w_t \qquad \cdots (2)$$

where $x(t)$ is a vector representing a reception signal sequence and $A$ is a transfer function matrix.

If a transmission channel has an impulse response length L, an impulse response vector of the transmission channel is expressed as $[a_0, a_1, ..., a_{x-1}]^T$. Then, the transfer function matrix $A$ is expressed as follows:

$$A = \begin{bmatrix} a_0 & a_1 & \cdots & a_{L-1} & 0 & \cdots & 0 \\ 0 & a_0 & \cdots & a_{L-2} & a_{L-1} & 0 & \vdots \\ \vdots & \ddots & \ddots & \vdots & \cdots & a_{L-1} & 0 \\ 0 & \cdots & 0 & a_0 & a_1 & \cdots & a_{L-1} \end{bmatrix} \qquad \cdots (3)$$

Namely, the matrix $A$ becomes vectors of N rows and (N+(L-1)) columns. Then, the average power of the reception signal $y(t)$ is expressed as follows with $<\cdot>$ being an ensemble mean:

$$\left\langle \left| y\left(t\right)\right|^{2}\right\rangle = w_{t}^{T} A w_{r} \left\langle s\left(t\right)s^{H}\left(t\right)\right\rangle w_{t}^{H} A^{H} w_{r}^{\cdot}$$
$$= w_{r}^{T} A^{T} w_{t} w_{t}^{H} A^{\cdot} w_{r}^{\cdot} \left\langle s^{H}\left(t\right)s\left(t\right)\right\rangle$$
$$= L_{t} w_{t}^{T} A w_{r} w_{t}^{H} A^{H} w_{r}^{\cdot}$$
$$= L_{t} w_{r}^{T} A^{T} w_{t} w_{t}^{H} A^{\cdot} w_{r}^{\cdot} \qquad \cdots (4)$$

where $L_t$ is a transmission filter length.

The expression (4) is a base of the restrictive condition (1), and a maximum value of the expression (4) must be found. As is well known, a solution of an optimization problem under a restrictive condition can be found according to Lagrange's method of indeterminate coefficients. According to the Lagrange's method, a maximum value of <$|y(t)|^2$> is a solution of the following expressions:

$$h = \frac{1}{L_t}\left\langle \left| y\left(t\right)\right|^{2}\right\rangle - \lambda_{t}\left(w_{t}^{T} w_{t}^{\cdot} - 1\right) - \lambda_{r}\left(w_{r}^{T} w_{r}^{\cdot} - 1\right) \qquad \cdots (5)$$

$$\frac{\partial h}{\partial w_t} = A w_r w_r^{H} A^{H} w_t^* - \lambda_t w_t^* = 0 \qquad\qquad (6)$$

$$\frac{\partial h}{\partial w_r} = A^{T} w_t w_t^{H} A^* w_r^* - \lambda_r w_r^* = 0 \qquad\qquad (7)$$

Solutions of the expressions (6) and (7) are obtained as follows:

$$A w_r w_r^{H} A^{H} w_t^* = \lambda_t w_t^* \qquad\qquad (8)$$

$$A^{T} w_t w_t^{H} A^* w_r^* = \lambda_r w_r^* \qquad\qquad (9)$$

The tap coefficients in the expressions (8) and (9) are nested. A conventional technique assigns proper initial values $w_t(0)$ and $w_r(0)$ for the tap coefficients, substitutes $w_r(0)$ for $w_r$ of the expression (8), solves an eigenvalue problem related to $w_t$, and sets the solution as $w_t(1)$. Then, $w_t(1)$ is substituted for $w_t$ of the expression (9), an eigenvalue problem related to $w_r$ is solved, and the solution is set as $w_r(1)$. These operations are repeated to find converged solutions. This technique is called a sequential method in this specification.

The sequential method has no assurance of convergence. Namely, the sequential method has a risk of divergence. Even if it meets convergence, it needs iterations of operations before providing converged values, with each iteration requiring two eigenvalue decomposition operations. In this way, the sequential method involves a risk of divergence and needs many operations.

SUMMARY OF THE INVENTION

An object of the present invention is to provide a communication technique capable of surely and stably providing solutions only by solving eigenvalue problems twice, thereby greatly reducing the number of operations.

To achieve the above object, there is provided a communication method employing a transmitter and a receiver, for carrying out signal processing adapted for transmission-channel characteristics, comprising the steps of: in the transmitter: detecting a transmission-signal characteristics-correcting coefficient sent from the receiver; and correcting, according to the transmission-signal-characteristics-correcting coefficient, at least one of a transfer function and a spatial frequency characteristic of a transmission signal; and in the receiver: computing the transmission-signal-characteristics-correcting coefficient and a reception-signal-characteristics-correcting coefficient through the processes of detecting correlation of a reception signal, and carrying out eigenvalue decomposition on a product matrix obtained by multiplying a correlation matrix having the detected correlation as elements and a transported matrix of the correlation matrix together; correcting, according to the reception-signal-characteristics-correcting coefficient, at least one of a frequency characteristic and a spatial frequency characteristic of the reception signal; and transmitting the transmission-signal-characteristics-correcting coefficient to the transmitter.

Further, to achieve the above object, there is provided a communication method employing a base station and a terminal each having a transmitter and a receiver, for carrying out signal processing adapted for transmission-channel characteristics, comprising the steps of: in one of the base station and the terminal: in the receiver: computing a reception-signal- characteristics-correcting coefficient through the processes of detecting a correlation of a reception signal, and carrying out eigenvalue decomposition on a product matrix obtained by multiplying a correlation matrix having the detected correlation as elements and a transported matrix of the correlation matrix together; and correcting, according to the reception-signal-characteristics-correcting coefficient, at least one of a frequency characteristic and a spatial frequency characteristic of the reception signal; and in the other of the base station and the terminal: in the receiver: computing a transmission-signal-characteristics-correcting coefficient through the processes of detecting a correlation of a reception signal, and carrying out eigenvalue decomposition on a product matrix obtained by multiplying a correlation matrix having the detected correlation as elements and a transported matrix of the correlation matrix together; and in the transmitter: correcting, according to the transmission-signal-characteristics-correcting coefficient, at least a transfer function and a spatial frequency characteristic of a transmission signal.

Further, to achieve the above object, there is provided a communication method employing a base station and a terminal each having a transmitter and a receiver, for carrying out signal processing adapted for transmission-channel characteristics, comprising the steps of: in the receiver of each of the base station and terminal: computing a transmission-signal-characteristics-correcting coefficient and a reception-signal-characteristics-correcting coefficient through the processes of detecting a correlation of a reception signal, and carrying out eigenvalue decomposition on a product matrix obtained by multiplying a correlation matrix having the detected correlation as elements and a transported matrix of the correlation matrix together; and correcting, according to the reception-signal-characteristics-correcting coefficient, at least one of a frequency characteristic and a spatial frequency characteristic of the reception signal; and in the transmitter of each of the base station and terminal: correcting, according to the transmission- signal-characteristics-correcting coefficient, at least one of a transfer function and a spatial frequency characteristic of a transmission signal.

In a preferred embodiment of the present invention, the operation of correcting the transmission signal includes: convoluting the transmission signal with the transmission-signal-characteristics-correcting coefficient.

In a preferred embodiment of the present invention, the operation of correcting the transmission signal includes: changing, according to the transmission-signal-characteristics-correcting coefficient, the frequency characteristics of a signal to be transmitted from an antenna.

In a preferred embodiment of the present invention, the operation of correcting the transmission signal includes: changing, according to the transmission-signal-characteristics-correcting coefficient, the phase distributions of signals to be transmitted from antenna elements.

In a preferred embodiment of the present invention, the operation of correcting the transmission signal includes: changing, according to the transmission-signal-characteristics-correcting coefficient, the frequency characteristics and phase distributions of a signal to be transmitted from an antenna.

In a preferred embodiment of the present invention, the operation of correcting the reception signal includes: convoluting the reception signal with the reception-signal-characteristics-correcting coefficient.

In a preferred embodiment of the present invention, the operation of correcting the reception signal includes: changing, according to the reception-signal-characteristics-correcting coefficient, the frequency characteristic of the reception signal.

In a preferred embodiment of the present invention, the operation of correcting the reception signal includes: carrying out, according to the reception-signal-characteristics-correcting coefficient, weight and add operations on each of signals received by antenna elements.

In a preferred embodiment of the present invention, the operation of correcting the reception signal includes: changing, according to the reception-signal-characteristics-correcting coefficient, the frequency characteristics of signals received by antenna elements and adding the frequency-characteristic-changed signals to one another.

In a preferred embodiment of the present invention, the communication method further comprises: in the transmitter: storing training signals for antenna elements, respectively; and transmitting the training signals from the antenna elements; and in the receiver: storing the same training signals as those stored in the transmitter; and in the operation of computing at least one of the signal-characteristics-correcting coefficients, finding correlation values between the training signals and signals received by antenna elements, and carrying out eigenvalue decomposition on the product matrix obtained by multiplying the correlation matrix having the found correlation values as elements and the transported matrix of the correlation matrix together.

In a preferred embodiment of the present invention, the communication method further comprises: in the transmitter: spreading an information signal according to different code words for the antenna elements, respectively; and in the receiver: in the operation of computing at least one of signal-characteristics-correcting coefficients, branching each of signals received by antenna elements, finding correlation values between the branched signals and the code words sent from the transmitter, and carrying out eigenvalue decomposition on the product matrix obtained by multiplying the correlation matrix having the found correlation values as elements and the transported matrix of the correlation matrix together.

Further, to achieve the above object, there is provided a communication system employing a transmitter and a receiver, for carrying out signal processing adapted for transmission-channel characteristics, comprising: the transmitter having: coefficient detection means for detecting a transmission-signal- characteristics-correcting coefficient sent from the receiver; and transmission signal correction means for correcting, according to the transmission-signal-characteristics-correcting coefficient, at least one of a transfer function and a spatial frequency characteristic of a transmission signal; and the receiver having: coefficient computation means for the transmission-signal-characteristics-correcting coefficient and a reception-signal-characteristics-correcting coefficient through the processes of detecting correlation of a reception signal, and carrying out eigenvalue decomposition on a product matrix obtained by multiplying a correlation matrix having the detected correlation as elements and a transported matrix of the correlation matrix together; reception signal correction means for correcting, according to the reception-signal-characteristics-correcting coefficient, at least one of a frequency characteristic and a spatial frequency characteristic of a reception signal; and coefficient transmission means for transmitting the transmission-signal-characteristics-correcting coefficient to the transmitter.

Further, to achieve the above object, there is provided a communication system employing a base station and a terminal each having a transmitter and a receiver, for carrying out signal processing adapted for transmission-channel characteristics, comprising: in one of the base station and terminal: the receiver having: coefficient computation means for computing a reception-signal-characteristics-correcting coefficient through the processes of detecting a correlation of a reception signal, and carrying out eigenvalue decomposition on a product matrix obtained by multiplying a correlation matrix having the detected correlation as elements and a transported matrix of the correlation matrix together; and reception signal correction means for correcting, according to the reception-signal-characteristics-correcting coefficient, at leas one of a frequency characteristic and a spatial frequency characteristic of the reception signal; and in the other of the base station and terminal: the receiver having: coefficient computation means for computing a transmission-signal-characteristics-correcting coefficient through the processes of detecting a correlation of a reception signal, and carrying out eigenvalue decomposition on a product matrix obtained by multiplying a correlation matrix having the detected correlation as elements and a transported matrix of the correlation matrix together; and the transmitter having: transmission signal correction means for correcting, according to the transmission-signal-characteristics-correcting coefficient, at least one of a transfer function and a spatial frequency characteristic of a transmission signal.

Further, to achieve the above object, there is provided a communication system employing a base station and a terminal each having a transmitter and a receiver, for carrying out signal processing adapted for transmission-channel characteristics, comprising: the receiver of each of the base station and terminal having: coefficient computation means for computing a transmission-signal-characteristics-correcting coefficient and a reception-signal-characteristics-correcting coefficient through the processes of detecting a correlation of a reception signal, and carrying out eigenvalue decomposition on a product matrix obtained by multiplying a correlation matrix having the detected correlation as elements and a transported matrix of the correlation matrix together; and reception signal correction means for correcting, according to the reception-signal-characteristics-correcting coefficient, at least one of a frequency characteristic and a spatial frequency characteristic of the reception signal; and the transmitter of each of the base station and terminal having: transmission signal correction means for correcting, according to the transmission-signal-characteristics-correcting coefficient, at least one of a transfer function and a spatial frequency characteristic of a transmission signal.

In a preferred embodiment of the present invention, the transmitter has: antenna elements; training signal storage means for storing training signals for signals to be transmitted from the antenna elements, respectively; and training signal transmission means for transmitting the training signals; and the receiver has: antenna elements; training signal storage means for storing the same training signals as those stored in the transmitter; and the coefficient computation means computing the transmission-signal-characteristics-correcting coefficient and the reception-signal-characteristics-correcting coefficient through the processes of finding correlation values between the training signals and signals received by antenna elements, and carrying out eigenvalue decomposition on the product matrix obtained by multiplying the correlation matrix having the found correlation values as elements and the transported matrix of the correlation matrix together.

In a preferred embodiment of the present invention, the transmitter has: antenna elements; and spread means for spreading an information signal according to different code words for the antenna elements, respectively; and the receiver has: antenna elements; signal branch means for branching each of signals received by the antenna elements; and the coefficient computation means for computing the transmission-signal-characteristics-correcting coefficient and the reception-signal-characteristics-correcting coefficient through the processes of finding correlation values between the branched signals and the code words sent from the transmitter, and carrying out eigenvalue decomposition on the product matrix obtained by multiplying the correlation matrix having the found correlation values as elements and the transported matrix of the correlation matrix together.

Further, to achieve the above object, there is provided, in a communication system employing a transmitter and a receiver, for carrying out signal processing adapted for transmission-channel characteristics, the transmitter comprising: coefficient detection means for detecting a transmission-signal-characteristics-correcting coefficient sent from the receiver; and transmission signal correction means for correcting, according to the transmission-signal-characteristics-correcting coefficient, at least one of a transfer function and a spatial frequency characteristic of a transmission signal.

Further, to achieve the above object, there is provided, in a communication system employing a transmitter and a receiver, for carrying out signal processing adapted for transmission-channel characteristics, the transmitter comprising: transmission signal correction means for correcting, according to a transmission-signal-characteristics-correcting coefficient found by the receiver, at least one of a transfer function and a spatial frequency characteristic of a transmission signal.

In a preferred embodiment of the present invention, the transmission signal correction means convolutes the transmission signal with the transmission-signal-characteristics-correcting coefficient.

In a preferred embodiment of the present invention, the transmitter further comprises: antenna elements; and the transmission signal correction means changing, according to the transmission-signal-characteristics-correcting coefficient, the frequency characteristics of signals to be transmitted from the antenna elements.

In a preferred embodiment of the present invention, the transmitter further comprises: antenna elements; and the transmission signal correction means changing, according to the transmission-signal-characteristics-correcting coefficient, the phase distributions of signals to be transmitted from the antenna elements.

In a preferred embodiment of the present invention, the transmitter further comprising: antenna elements; and the transmission signal correction means changing, according to the transmission-signal-characteristics-correcting coefficient, the frequency characteristics and phase distributions of signals to be transmitted from the antenna elements.

In a preferred embodiment of the present invention, the transmitter further comprises: training signal storage means for storing training signals for signals to be transmitted from the antenna elements, respectively; and training signal transmission means for transmitting the training signals.

In a preferred embodiment of the present invention, the transmitter further comprises: spread means for spreading an information signal according to different code words for the antenna elements, respectively.

Further, to achieve the above object, there is provided, in a communication system employing a transmitter and a receiver, for carrying out signal processing adapted for transmission-channel characteristics, the receiver comprising: coefficient computation means for computing a transmission-signal-characteristics-correcting coefficient and a reception-signal-characteristics-correcting coefficient through the processes of detecting correlation of a reception signal, and carrying out eigenvalue decomposition on a product matrix obtained by multiplying a correlation matrix having the detected correlation as elements and a transported matrix of the correlation matrix together; reception signal correction means for correcting, according to the reception-signal-characteristics-correcting coefficient, at least one of a frequency characteristic and a spatial frequency characteristic of the reception signal; and coefficient transmission means for transmitting the transmission-signal-characteristics-correcting coefficient to the transmitter.

Further, to achieve the above object, there is provided, in a communication system employing a transmitter and a receiver, for carrying out signal processing adapted for transmission-channel characteristics, the receiver comprising: coefficient computation means for computing a reception-signal-characteristics-correcting coefficient through the processes of detecting a correlation of a reception signal, and carrying out eigenvalue decomposition on a product matrix obtained by multiplying a correlation matrix having the detected correlation as elements and a transported matrix of the correlation matrix together; and reception signal correction means for correcting, according to the reception-signal-characteristics-correcting coefficient, at least one of a frequency characteristic and a spatial frequency characteristic of the reception signal.

Further, to achieve the above object, there is provided, in a communication system employing a transmitter and a receiver, for carrying out signal processing adapted for transmission-channel characteristics, the receiver comprising: coefficient computation means for computing a transmission-signal-characteristics-correcting coefficient through the processes of detecting a correlation of a reception signal, and carrying out eigenvalue decomposition on a product matrix obtained by multiplying a correlation matrix having the detected correlation as elements and a transported matrix of the correlation matrix together.

In a preferred embodiment of the present invention, the reception signal correction means convolutes the reception signal with the reception-signal-characteristics-correcting coefficient.

In a preferred embodiment of the present invention, the receiver further comprises: antenna elements; and the reception signal correction means carrying out, according to the reception-signal-characteristics-correcting coefficient, weight and add operations on each of signals received by the antenna elements.

In a preferred embodiment of the present invention, the receiver further comprises: antenna elements; and the reception signal correction means changing, according to the reception-signal-characteristics- correcting coefficient, the frequency characteristics of signals received by the antenna elements and adding the frequency-characteristic-changed signals to one another.

In a preferred embodiment of the present invention, the receiver further comprises: antenna elements; training signal storage means for storing the same training signals as those stored in the transmitter: and the coefficient computation means for computing the transmission-signal-characteristics-correcting coefficient and the reception-signal-characteristics-correcting coefficient through the processes of finding correlation values between the training signals and signals received by antenna elements, and carrying out eigenvalue decomposition on the product matrix obtained by multiplying the correlation matrix having the found correlation values as elements and the transported matrix of the correlation matrix together.

In a preferred embodiment of the present invention, the receiver further comprising: antenna elements; and the coefficient computation means for computing the transmission-signal-characteristics-correcting coefficient and the reception-signal-characteristics-correcting coefficient through the processes of branching each of signals received by the antenna elements, finding correlation values between the training signals and signals received by antenna elements, and carrying out eigenvalue decomposition on the product matrix obtained by multiplying the correlation matrix having the found correlation values as elements and the transported matrix of the correlation matrix together.

The nature, principle and utility of the invention will become more apparent from the following detailed description when read in conjunction with the accompanying drawings.

BRIEF DESCRIPTION OF THE DRAWINGS

In the accompanying drawings:

Fig.1 is a block diagram showing a communication system according to a related art;
Fig.2 is a block diagram showing an adaptive equalizer according to the related art;
Fig.3 is a block diagram showing a diversity reception system according to a related art;
Fig.4 is a block diagram showing a transmission-diversity reception system according to a related art;
Fig.5 is a block diagram showing an adaptive array reception system according to a related art;
Fig.6 is a block diagram showing an adaptive array according to the related art of Fig.5;
Fig.7 is a block diagram showing a dual equalizing communication system according to a related art;
Fig.8 is a block diagram showing a tapped delay line filter according to the related art of Fig.7;
Fig.9 is a block diagram showing a basic configuration of a communication system according to the present invention;
Fig.10 is a block diagram showing a dual beam forming system according to a first embodiment of the present invention;
Fig.11 is a block diagram showing a transmission beam forming unit according to the first embodiment;
Fig.12 is a block diagram showing a dual beam forming system employing spatio-temporal encoding according to a second embodiment of the present invention;
Fig. 13 is a block diagram showing a dual spatio-temporal beam forming system according to a third embodiment of the present invention;
Fig.14 is a block diagram showing a spatio-temporal beam forming unit according to the third embodiment; and
Fig.15 is a block diagram showing a spatio-temporal transmission beam forming unit according to the third embodiment.

DETAILED DESCRIPTION OF EMBODIMENTS

Fig.1 is a block diagram showing a basic configuration of a communication system according to the present invention. The system includes a signal input terminal 1, a transmission signal corrector 2 to correct the transfer function and spatial frequency characteristic of a transmission signal, a transmission channel 3, a reception signal corrector 4 to correct the transfer function and spatial frequency characteristic of a reception signal, an output terminal 5, and a coefficient estimator 6 to estimate coefficients for the correctors 2 and 4.

The coefficient for the transmission signal corrector 2 is represented with $w_t$ and the coefficient for the reception signal corrector 4 with $w_r$. Under the restrictive condition of the expression (1), a solution to maximize a reception signal level is a solution of the expression (5). In practice, the solution is obtained by solving the eigenvalue problems of the expressions (8) and (9).

The left side of the expression (8) is multiplied by a vector $w_t{}^T$ as follows:

$$w_t^T A w_r w_r^H A^H w_t^* = \lambda_t w_t^T w_t^* = \lambda_t \tag{10}$$

Similarly, the left side of the expression (9) is multiplied by a vector $w_r{}^T$ as follows:

$$w_r^T A^T w_t w_t^H A^* w_r^* = \lambda_r w_r^T w_r^* = \lambda_r \tag{11}$$

Due to the expression (1), the expressions (10) and (11) have the following relationships:

$$
\begin{aligned}
w_t^T A w_r w_r^H A^H w_t^* &= \left( w_t^T A w_r \right)\left( w_r^T A^T w_t \right)^* \\
&= \left( w_r^T A^T w_t \right)\left( w_r^T A^T w_t \right)^* \qquad \cdots (12) \\
&= \left| w_r^T A w_t \right|^2
\end{aligned}
$$

$$
\begin{aligned}
w_r^T A^T w_t w_t^H A^H w_r^* &= \left( w_r^T A w_t \right)\left( w_t^T A w_r \right)^* \\
&= \left( w_t^T A w_r \right)\left( w_t^T A w_r \right)^* \qquad \cdots (13) \\
&= \left| w_t^T A w_r \right|^2
\end{aligned}
$$

Naturally, $w_r^T A^T w_t = w_t^T A w_r$. Accordingly, the right sides of the expressions (12) and (13) are equal to each other.

$$\lambda_t = \lambda_r = \lambda \tag{14}$$

Then, the following is obtained:

$$w_r^T A^T w_t = w_t^T A w_r = \sqrt{\lambda} \tag{15}$$

The expression (15) is substituted into the expression (8) as follows:

$$A w_r w_r^H A^H w_t^* = A w_r \left( w_r^T A^T w_t \right)^* = \lambda w_t^* \tag{16.1}$$

Then, the following is obtained:

$$Aw_r = \sqrt{\lambda}\,w_t^*$$ (16.2)

The expression (15) is substituted into the expression (9) as follows:

$$A^T w_t w_t^H A^* w_r^* = A^T w_t (w_t^T A w_r)^* = \lambda w_r^*$$ (17.1)

Then, the following is obtained:

$$A^T w_t = \sqrt{\lambda}\,w_r^*$$ (17.2)

The complex conjugate of $w_t$ in the expression (16.2) is substituted into the expression (17.2) as follows:

$$A^T w_t = \frac{1}{\sqrt{\lambda}} A^T A^* w_r^* = \sqrt{\lambda}\,w_r^*$$ (18.1)

Then, the following is obtained:

$$A^T A^* w_r^* = \lambda w_r^*$$ (18.2

The complex conjugate of $w_r$ in the expression (17.2) is substituted into the expression (16.2) as follows:

$$Aw_r = \frac{1}{\sqrt{\lambda}} AA^H w_t^* = \sqrt{\lambda}\,w_t^*$$ (19.1)

Then, the following is obtained:

$$AA^H w_t^* = \lambda w_t^*$$ (19.2)

The coefficient $w_t$ for the transmission signal corrector 2 and the coefficient $w_r$ for the reception signal corrector 4 are obtained by solving the eigenvalue problems of the expressions (18.2) and (19.2). Namely, the solutions can be obtained only by solving the eigenvalue problems expressed with the expressions (18.2) and (19.2).

In this way, the present invention is capable of surely finding the solutions only by solving eigenvalue problems twice. The present invention can stably provide the solutions and greatly reduce the number of operations compared with the related arts. In practice, the eigenvalue problems are solved according to, for example, Jacobi method and QR method.

Various embodiments of the present invention will be explained in detail with reference to the accompanying drawings . Systems described in the embodiments are based on the principle mentioned above. When the present invention is applied to the dual equalizing communication system of Fig. 7, solutions of the expressions (18.2) and (19.2) serve as tap coefficients for the tapped delay lines on the transmission and reception sides.

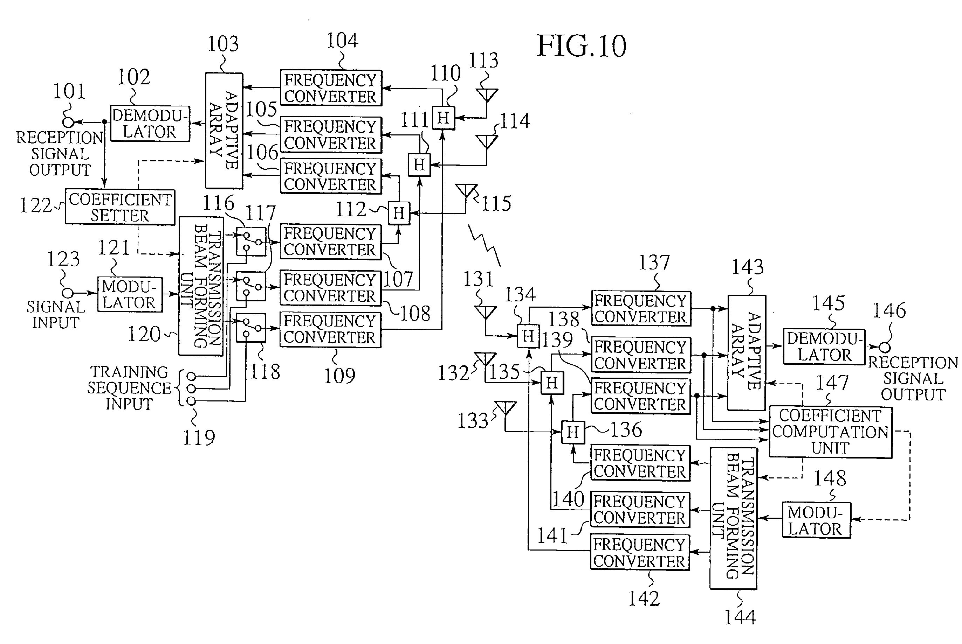

Fig.10 is a block diagram showing an exemplary configuration of a dual beam forming system according to the first embodiment of the present invention. The system includes reception signal output terminals 101 and 146, a signal input terminal 123, demodulators 102 and 145, modulators 121 and 148, transmission beam forming units 120 and 144, adaptive arrays 103 and 143, frequency converters 104 to 109 and 137 to 142, antenna sharing units 110 to 112 and 134 to 136, antennas 113 to 115 and 131 to 133, switching circuits 116 to 118, a training sequence input terminal 119, a coefficient computation unit 147 for computing coefficients or weights for the adaptive array 143 and transmission beam forming unit 144, and a coefficient setter 122 for setting the coefficients or weights, which have been computed by the coefficient computation unit 147 and transmitted, for the adaptive array 103 and transmission beam forming unit 120.

The coefficient or weight for the transmission beam forming units 120 and 144 is $w_t$ and the coefficient or weight for the adaptive arrays 103 and 143 is $w_r$. Then, a reception signal $y(t)$ is expressed as follows:

$$y(t) = w_t^T x(t) = w_t^T (Aw_r u(t))$$
$$= w_t^T A w_r u(t) = w_r^T A^T w_t u(t) \qquad \cdots (20)$$

where $u(t)$ is a transmission signal expressed in scalar.

Like the expression (1), the following restrictive condition is set:

$$\langle u^*(t)u(t)\rangle = 1 \qquad \cdots (21)$$

The restrictive condition of the expression (21) is employed instead of the restrictive condition of the expression (1) related to a transmission signal vector. The weights $w_t$ and $w_r$ to maximize a reception signal level are obtainable according to the expressions (6) and (7) whose solutions are provided by the expressions (18.2) and (19.2). In this case, the transfer function matrix A of the expression (3) becomes as follows:

$$A = \begin{bmatrix} a_{0,0} & a_{0,1} & \cdots & a_{0,M-1} \\ a_{1,0} & a_{1,1} & \cdots & a_{1,M-1} \\ \vdots & \ddots & \ddots & \vdots \\ a_{N-1,0} & a_{N-1,1} & \cdots & a_{N-1,M-1} \end{bmatrix} \qquad \cdots (22)$$

where $N$ and $M$ are the numbers of transmission and reception antennas, respectively, and $a_{ij}$ is response between a left "$i$"th antenna and a right "$j$"th antenna.

To obtain response between the transmission and reception antennas, the system of Fig. 10 employs a training sequence. A training sequence $[b_{i,1}, b_{i,2}, ..., b_{i,Ls}]$ ($i = 1, ..., N$-1) is prepared for each antenna, where $Ls$ is a training sequence length. Each training sequence is provided with orthogonal vectors. Namely, each training sequence satisfies the following:

$$\sum_{k=1}^{Ls} b_{i,k} b_{l,k}^* = \begin{cases} Ls & i = l \\ 0 & i \neq l \end{cases} \qquad \cdots (23)$$

During a training sequence transmission period, the switching circuits 116 to 118 select the training signals, and the antennas transmit the different training signals, respectively. A "$j$"th antenna receives the following signal $y_j(t)$ if the influence of noise is ignored:

$$y_{j(t)} = \sum_{i=0}^{N-1} \sum_{k=1}^{Ls} a_{i,j} b_{i,k} h(t - kT) \qquad \cdots (24)$$
$$j = 1, ..., M \quad l = 1, ..., N$$

where $T$ is symbol cycle and $h(t)$ a transfer function of a waveform shaping filter.

Array response is estimated according to the following correlation operation:

$$\sum_{n=1}^{Ls} b_{l,n}^{*} y_j \left( t + nT \right)$$

$$= \sum_{n=1}^{Ls} b_{l,n}^{*} \sum_{i=0}^{N-1} \sum_{k=1}^{Ls} a_{i,j} b_{i,k} h \left( (n-k)T \right) \qquad \cdots (25)$$

$$j = 1, \ldots, M \quad l = 1, \ldots, N$$

If the waveform shaping filter is a Nyquist filter employed by, for example, a QPSK modulation system, it satisfies the following:

$$h(kT) = \begin{cases} 1 & k = 0 \\ 0 & k \neq 0 \end{cases} \qquad \cdots (26)$$

According to the expression (26), the expression (25) is written as follows:

$$\sum_{n=1}^{Ls} b_{l,n}^{*} y_j \left( t + nT \right)$$

$$= \sum_{i=0}^{N-1} \sum_{k=1}^{Ls} a_{i,j} b_{i,k} b_{l,k}^{*} = Ls \left| b_{l,k} \right|^2 a_{l,j} \qquad \cdots (27)$$

$$j = 1, \ldots, M \quad l = 1, \ldots, N$$

A correlation operation based on the expression (27) provides array response and generates a transfer function matrix.

The system of Fig.10 transmits the training signals during a training period. The coefficient computation unit 147 finds a transfer function matrix according to the expression (27). According to the found transfer function matrix, the coefficients $w_t$ and $w_r$ are estimated. After the training period, the right transmitter-receiver generates a transmission beam and reception beam and transmits the coefficients $w_t$ and $w_r$. The left receiver demodulates one of signals from the frequency converters 104 to 106 instead of carrying out an adaptive array process and stores the coefficients contained in the signal in the coefficient setter 122.

According to the transmitted coefficients $w_t$ and $w_r$, the transmission beam forming unit 120 and adaptive array 103 are operated to achieve dual beam forming communication.

In the system of Fig.10, the coefficient computation unit 147 is arranged only in the right transmitter-receiver, and the coefficients $w_t$ and $w_r$ computed by the coefficient computation unit 147 are transmitted to the left receiver. In the left receiver, the coefficient setter 122 extracts the coefficients $w_t$ and $w_r$ from a demodulated signal and sets the extracted coefficients for the transmission beam forming unit 120 and adaptive array 103. Instead, each of the left and right transmitter-receivers may have a coefficient computation unit to form dual beams.

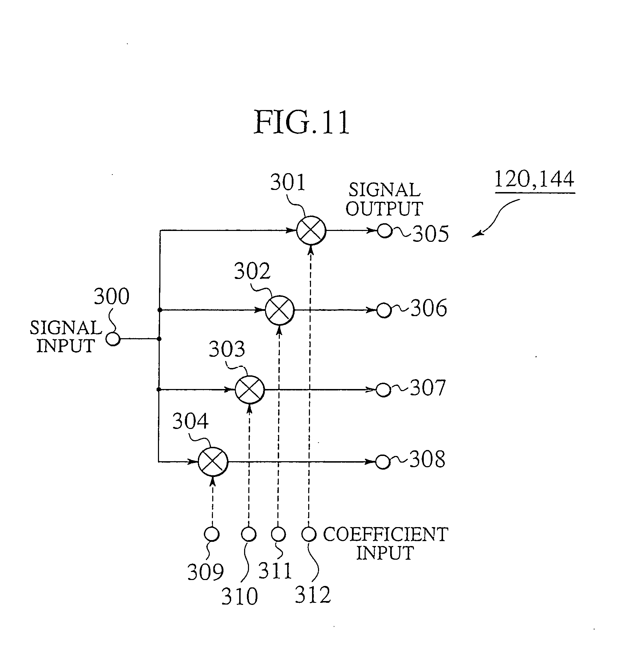

Fig.11 shows an exemplary configuration of any one of the transmission beam forming units 120 and 144. The transmission beamforming unit includes a signal input terminal 300, multipliers 301 to 304, signal output terminals 305 to 308, and coefficient input terminals 309 to 312.

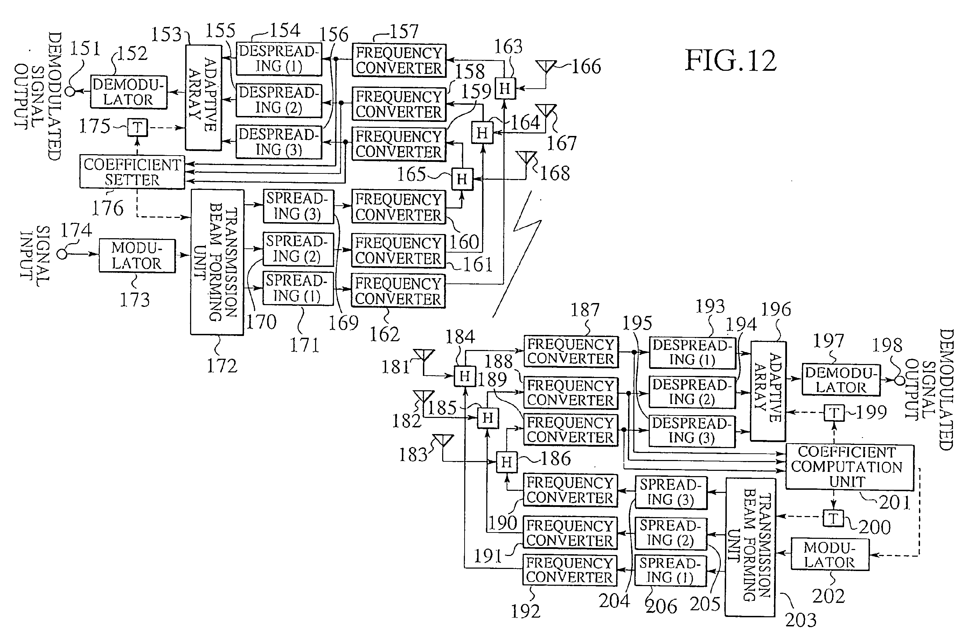

Fig.12 is a block diagram showing a dual beam forming system employing spatio-temporal encoding according to the second embodiment of the present invention. The system employs the dual beam forming system of the first embodiment shown in Fig.10. The system of Fig.12 includes demodulated signal output terminals 151 and 198, a signal input terminal 174, demodulators 152 and 197, modulators 173 and 202, transmission beam forming units 172 and 203, adaptive arrays 153 and196, despread circuits 154 to 156 and 193 to 195, spread circuits 169 to 171 and 204 to 206, frequency converters 157 to 162 and 187 to 192, antenna sharing units 163 to 165 and 184 to 186, antennas 166 to 168 and 181 to 183, delay elements 175, 199, and 200, a coefficient computation unit 201, and a coefficient setter 176.

Generally, a spatio-temporal encoding system carries out a spreading process with a different spread code for each antenna. Accordingly, a receiver carries out the correlation operation (despreading operation) of the expression (25) to estimate a transfer function matrix in real time. Namely, dual beams are formed without a training sequence.

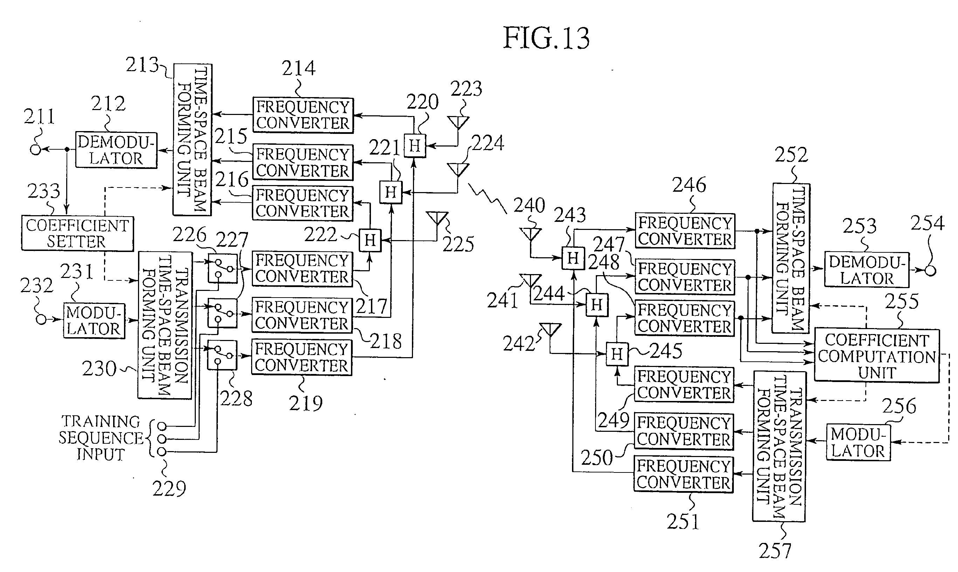

Fig. 13 is a block diagram showing a dual spatio-temporal beam forming system according to the third embodiment of the present invention. The system employs the dual beam forming system of the first embodiment shown in Fig.10.

The system of Fig.13 includes demodulated signal output terminals 211 and 254, a signal input terminal 232, demodulators 212 and 253, modulators 231 and 256, spatio-temporal beam forming units 213 and 252, spatio-temporal transmission beam forming units 230 and 257, frequency converters 214 to 219 and 246 and 251, antenna sharing units 220 to 222 and 243 to 245, antennas 223 to 225 and 240 to 242, switching circuits 226 to 228, a training sequence input terminal 229, a coefficient computation unit 255, and a coefficient setter 233.

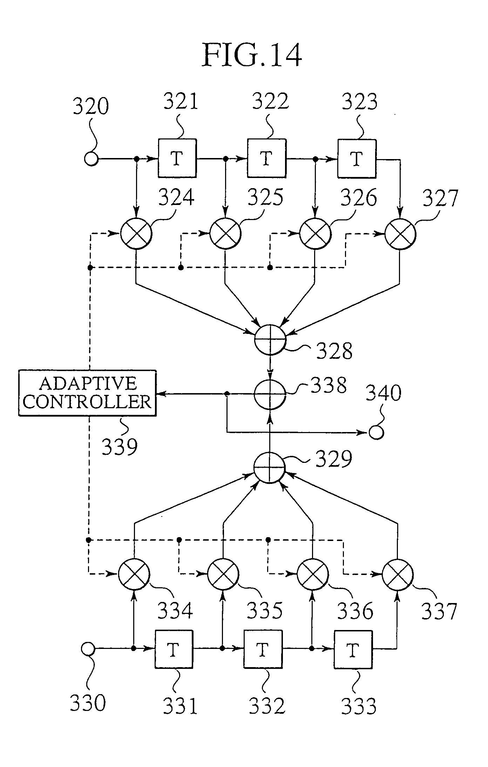

Fig.14 shows an exemplary configuration of any one of the spatio-temporal beam forming units 213 and 252 with two antennas. The spatio-temporal beam forming unit includes input terminals 320 and 330, delay elements 321 to 323 and 331 to 333, multipliers 324 to 327 and 334 to 337, adders 328 and 329, an adder 338, an adaptive controller 339 to provide the multipliers 324 to 327 and 334 to 337 each with a coefficient as another input signal, and a signal output terminal 340.

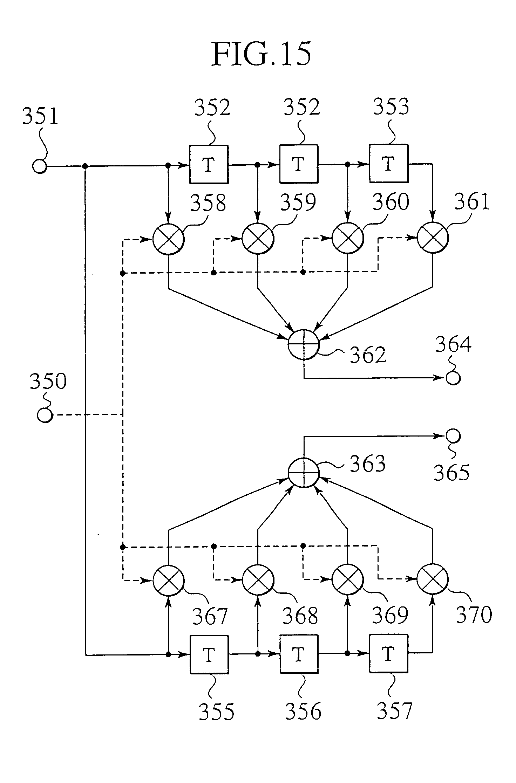

Fig.15 shows an exemplary configuration of any one of the spatio-temporal transmission beam forming units 230 and 257 with two antennas. The spatio-temporal transmission beam forming unit includes a signal input terminal 351, delay elements 352 to 357, multipliers 358 to 361 and 367 to 370, adders 362 and 363, signal output terminals 364 and 365, and a coefficient input terminal 350 to provide each another input of the multipliers 358 to 361 and 367 to 370 with a coefficient.

In the system of Fig.13, an "$i$"th antenna provides an input signal $x_i(t)$. A reception signal vector $x(t)$ is expressed as $x(t) = [x_1(t), x_1(t-T), ..., x_i(t), ..., x_M(t-(L_r-1)T)]^T$. Similarly, a transmission signal vector $s(t)$ is defined as $s(t) = [u(t), u(t-T), ..., u(t-(L_t-1)T), u(t), ..., u(t-(L_t-1)T), ...]^T$. As a result, transmission and reception signals are expressed with the expressions (1), (2), and (4). A transfer function matrix may slightly be different but it can be estimated with the use of a training sequence as mentioned above.

In this way, the present invention can provide a dual spatio-temporal beam forming communication system.

The present invention is capable of optimizing communication quality irrespective of transmission-channel characteristics and maximizing the transmission-channel characteristics. In particular, the present invention is capable of stabilizing and optimizing communication even under widely varying transmission environment such as mobile communication environment. The present invention is capable of estimating coefficients at high speed, to speedily follow changes in a transmission channel. Even with high-speed Doppler variations occurring in, for example, a bullet train cabin, the present invention is capable of achieving high-quality communication.

The present invention is capable of improving voice quality, data transmission throughput, and communication service quality.

It should be understood that many modifications and adaptations of the invention will become apparent to those skilled in the art and it is intended to encompass such obvious modifications and changes in the scope of the claims appended hereto.

**Claims**

1. A communication method employing a transmitter and a receiver, for carrying out signal processing adapted for transmission-channel characteristics, comprising the steps of:

    in the transmitter:

    detecting a transmission-signal characteristics-correcting coefficient ($W_t$) sent from the receiver; and correcting, according to the transmission-signal-characteristics-correcting coefficient ($W_t$), at least one of a transfer function ($A$) and a spatial frequency characteristic of a transmission signal; and

    in the receiver:

    computing the transmission-signal-characteristics-correcting coefficient ($W_t$) and a reception-signal-characteristics-correcting coefficient ($W_r$) through the processes of detecting correlation of a reception signal, and carrying out eigenvalue decomposition on a product matrix obtained by multiplying a correlation matrix having the detected correlation as elements and a transported matrix of the correlation matrix together; correcting, according to the reception-signal-characteristics-correcting coefficient ($W_r$), at least one of a frequency characteristic and a spatial frequency characteristic of the reception signal; and

transmitting the transmission-signal-characteristics-correcting coefficient ($W_t$) to the transmitter.

2. A communication method employing a base station and a terminal each having a transmitter and a receiver, for carrying out signal processing adapted for transmission-channel characteristics, comprising the steps of:

in one of the base station and the terminal:

in the receiver:

computing a reception-signal-characteristics-correcting coefficient ($W_r$) through the processes of detecting a correlation of a reception signal, and carrying out eigenvalue decomposition on a product matrix obtained by multiplying a correlation matrix having the detected correlation as elements and a transported matrix of the correlation matrix together; and
correcting, according to the reception-signal-characteristics-correcting coefficient ($W_r$), at least one of a frequency characteristic and a spatial frequency characteristic of the reception signal; and

in the other of the base station and the terminal:

in the receiver:

computing a transmission-signal-characteristics-correcting coefficient ($W_t$) through the processes of detecting a correlation of a reception signal, and carrying out eigenvalue decomposition on a product matrix obtained by multiplying a correlation matrix having the detected correlation as elements and a transported matrix of the correlation matrix together; and

in the transmitter:

correcting, according to the transmission-signal-characteristics-correcting coefficient ($W_t$), at least a transfer function (A) and a spatial frequency characteristic of a transmission signal.

3. A communication method employing a base station and a terminal each having a transmitter and a receiver, for carrying out signal processing adapted for transmission-channel characteristics, comprising the steps of:

in the receiver of each of the base station and terminal:

computing a transmission-signal-characteristics-correcting coefficient ($W_t$) and a reception-signal-characteristics-correcting coefficient ($W_r$) through the processes of detecting a correlation of a reception signal, and carrying out eigenvalue decomposition on a product matrix obtained by multiplying a correlation matrix having the detected correlation as elements and a transported matrix of the correlation matrix together; and
correcting, according to the reception-signal-characteristics-correcting coefficient ($W_r$), at least one of a frequency characteristic and a spatial frequency characteristic of the reception signal; and

in the transmitter of each of the base station and terminal:

correcting, according to the transmission-signal-characteristics-correcting coefficient ($W_t$), at least one of a transfer function ($\boldsymbol{A}$) and a spatial frequency characteristic of a transmission signal.

4. The communication method of any one of claims 1 to 3, wherein the operation of correcting the transmission signal includes:

convoluting the transmission signal with the transmission-signal-characteristics-correcting coefficient ($W_t$).

5. The communication method of any one of claims 1 to 3, wherein the operation of correcting the transmission signal includes:

changing, according to the transmission-signal-characteristics-correcting coefficient ($W_t$), the frequency characteristics of a signal to be transmitted from an antenna.

**6.** The communication method of any one of claims 1 to 3, wherein the operation of correcting the transmission signal includes:

changing, according to the transmission-signal-characteristics-correcting coefficient ($W_t$), the phase distributions of signals to be transmitted from antenna elements.

**7.** The communication method of any one of claims 1 to 3, wherein the operation of correcting the transmission signal includes:

changing, according to the transmission-signal-characteristics-correcting coefficient ($W_t$), the frequency characteristics and phase distributions of a signal to be transmitted from an antenna.

**8.** The communication method of any one of claims 1 to 3, wherein the operation of correcting the reception signal includes:

convoluting the reception signal with the reception-signal-characteristics-correcting coefficient ($W_r$).

**9.** The communication method of any one of claims 1 to 3, wherein the operation of correcting the reception signal includes:

changing, according to the reception-signal-characteristics-correcting coefficient ($W_r$), the frequency characteristic of the reception signal.

**10.** The communication method of any one of claims 1 to 3, wherein the operation of correcting the reception signal includes:

carrying out, according to the reception-signal-characteristics-correcting coefficient ($W_r$), weight and add operations on each of signals received by antenna elements.

**11.** The communication method of any one of claims 1 to 3, wherein the operation of correcting the reception signal includes:

changing, according to the reception-signal-characteristics-correcting coefficient ($W_r$), the frequency characteristics of signals received by antenna elements and adding the frequency-characteristic-changed signals to one another.

**12.** The communication method of any one of claims 6 and 7, further comprising:

in the transmitter:

storing training signals ($b_i$) for antenna elements, respectively; and
transmitting the training signals ($b_i$) from the antenna elements; and

in the receiver:

storing the same training signals ($b_i$) as those stored in the transmitter; and
in the operation of computing at least one of the signal-characteristics-correcting coefficients ($W_t$, $W_r$), finding correlation values between the training signals ($b_i$) and signals received by antenna elements, and carrying out eigenvalue decomposition on the product matrix obtained by multiplying the correlation matrix having the found correlation values as elements and the transported matrix of the correlation matrix together.

**13.** The communication method of any one of claims 6 and 7, further comprising:

in the transmitter:

spreading an information signal according to different code words for the antenna elements, respectively; and

in the receiver:

in the operation of computing at least one of signal-characteristics-correcting coefficients ($W_t$, $W_r$), branching each of signals received by antenna elements, finding correlation values between the branched signals and the code words sent from the transmitter, and carrying out eigenvalue decomposition on the product matrix obtained by multiplying the correlation matrix having the found correlation values as elements and the transported matrix of the correlation matrix together.

14. A communication system employing a transmitter and a receiver, for carrying out signal processing adapted for transmission-channel characteristics, comprising:

the transmitter having:

coefficient detection means (113-115, 110-112) for detecting a transmission-signal-characteristics-correcting coefficient ($W_t$) sent from the receiver; and
transmission signal correction means (120) for correcting, according to the transmission-signal-characteristics-correcting coefficient ($W_t$), at least one of a transfer function and a spatial frequency characteristic of a transmission signal; and

the receiver having:

coefficient computation means (147) for the transmission-signal-characteristics-correcting coefficient ($W_t$) and a reception-signal-characteristics-correcting coefficient ($W_r$) through the processes of detecting correlation of a reception signal, and carrying out eigenvalue decomposition on a product matrix obtained by multiplying a correlation matrix having the detected correlation as elements and a transported matrix of the correlation matrix together;
reception signal correction means (143) for correcting, according to the reception-signal-characteristics-correcting coefficient ($W_r$), at least one of a frequency characteristic and a spatial frequency characteristic of a reception signal; and
coefficient transmission means(148,144,140-142, 131-136) for transmitting the transmission-signal-characteristics-correcting coefficient ($W_t$) to the transmitter.

15. A communication system employing a base station and a terminal each having a transmitter and a receiver, for carrying out signal processing adapted for transmission-channel characteristics, comprising:

in one of the base station and terminal:

the receiver having:

coefficient computation means (147) for computing a reception-signal-characteristics-correcting coefficient ($W_r$) through the processes of detecting a correlation of a reception signal, and carrying out eigenvalue decomposition on a product matrix obtained by multiplying a correlation matrix having the detected correlation as elements and a transported matrix of the correlation matrix together; and
reception signal correction means (143) for correcting, according to the reception-signal-characteristics-correcting coefficient ($W_r$), at leas one of a frequency characteristic and a spatial frequency characteristic of the reception signal; and

in the other of the base station and terminal:

the receiver having:

coefficient computation means (147) for computing a transmission-signal- characteristics-correcting coefficient ($W_r$) through the processes of detecting a correlation of a reception signal, and carrying out eigenvalue decomposition on a product matrix obtained by multiplying a correlation matrix having the detected correlation as elements and a transported matrix of the correlation matrix together; and

the transmitter having:

transmission signal correction means (120) for correcting, according to the transmission-signal-characteristics-correcting coefficient ($W_t$), at least one of a transfer function and a spatial frequency characteristic of a transmission signal.

16. A communication system employing a base station and a terminal each having a transmitter and a receiver, for carrying out signal processing adapted for transmission-channel characteristics, comprising:

the receiver of each of the base station and terminal having:

coefficient computation means (147) for computing a transmission-signal-characteristics-correcting coefficient ($W_t$) and a reception-signal-characteristics-correcting coefficient ($W_r$) through the processes of detecting a correlation of a reception signal, and carrying out eigenvalue decomposition on a product matrix obtained by multiplying a correlation matrix having the detected correlation as elements and a transported matrix of the correlation matrix together; and
reception signal correction means (143) for correcting, according to the reception-signal-characteristics-correcting coefficient ($W_r$), at least one of a frequency characteristic and a spatial frequency characteristic of the reception signal; and

the transmitter of each of the base station and terminal having:

transmission signal correction means (120) for correcting, according to the transmission-signal-characteristics-correcting coefficient ($W_t$), at least one of a transfer function and a spatial frequency characteristic of a transmission signal.

17. The communication system of any one of claims 14 to 16, wherein:

the transmitter has:

antenna elements (113-115);
training signal storage means for storing training signals ($b_i$) for signals to be transmitted from the antenna elements (113-115), respectively; and
training signal transmission means (107-119), for transmitting the training signals ($b_i$); and

the receiver has:

antenna elements (113-115);
training signal storage means for storing the same training signals as those stored in the transmitter; and
the coefficient computation means (147) computing the transmission-signal-characteristics-correcting coefficient ($W_t$) and the reception-signal-characteristics-correcting coefficient ($W_r$) through the processes of finding correlation values between the training signals and signals received by antenna elements, and carrying out eigenvalue decomposition on the product matrix obtained by multiplying the correlation matrix having the found correlation values as elements and the transported matrix of the correlation matrix together.

18. The communication system of any one of claims 14 to 16, wherein:

the transmitter has:

antenna elements (166-168); and
spread means (169-171) for spreading an information signal according to different code words for the antenna elements (166-168), respectively; and

the receiver has:

antenna elements (181-183);
signal branch means for branching each of signals received by the antenna elements; and
the coefficient computation means (201) for computing the transmission-signal-characteristics-correcting coefficient ($W_t$) and the reception-signal-characteristics- correcting coefficient ($W_r$) through the processes of finding correlation values between the branched signals and the code words sent from the transmitter, and carrying out eigenvalue decomposition on the product matrix obtained by multiplying the correlation matrix having the found correlation values as elements and the transported matrix of the correlation matrix together.

**19.** In a communication system employing a transmitter and a receiver, for carrying out signal processing adapted for transmission-channel characteristics, the transmitter comprising:

coefficient detection means (110-115) for detecting a transmission-signal-characteristics-correcting coefficient ($W_t$) sent from the receiver; and
transmission signal correction means (120) for correcting, according to the transmission-signal-characteristics-correcting coefficient ($W_t$), at least one of a transfer function and a spatial frequency characteristic of a transmission signal.

**20.** In a communication system employing a transmitter and a receiver, for carrying out signal processing adapted for transmission-channel characteristics, the transmitter comprising:

transmission signal correction means (120) for correcting, according to a transmission-signal-characteristics-correcting coefficient ($W_t$) found by the receiver, at least one of a transfer function and a spatial frequency characteristic of a transmission signal.

**21.** The transmitter of any one of claims 19 and 20, wherein:

the transmission signal correction means (120) convolutes the transmission signal with the transmission-signal-characteristics-correcting coefficient ($W_t$).

**22.** The transmitter of any one of claims 19 and 20, further comprising:

antenna elements (113-115); and
the transmission signal correction means (120) changing, according to the transmission-signal-characteristics-correcting coefficient ($W_t$), the frequency characteristics of signals to be transmitted from the antenna elements (113-115).

**23.** The transmitter of any one of claims 19 and 20, further comprising:

antenna elements (113-115); and
the transmission signal correction means (120) changing, according to the transmission-signal-characteristics-correcting coefficient ($W_t$), the phase distributions of signals to be transmitted from the antenna elements (113-115).

**24.** The transmitter of any one of claims 19 and 20, further comprising:

antenna elements (113-115); and
the transmission signal correction means (120) changing, according to the transmission-signal-characteristics-correcting coefficient ($W_t$), the frequency characteristics and phase distributions of signals to be transmitted from the antenna elements (113-115).

**25.** The transmitter of any one of claims 23 and 24, further comprising:

training signal storage means for storing training signals ($b_i$) for signals to be transmitted from the antenna elements, respectively; and
training signal transmission means (107-119) for transmitting the training signals.

**26.** The transmitter of any one of claims 23 and 24, further comprising:

spread means (169-171) for spreading an information signal according to different code words for the antenna elements, respectively.

**27.** In a communication system employing a transmitter and a receiver, for carrying out signal processing adapted for transmission-channel characteristics, the receiver comprising:

coefficient computation means (147) for computing a transmission-signal-characteristics-correcting coefficient ($W_t$) and a reception- signal-characteristics-correcting coefficient ($W_r$) through the processes of detecting correlation of a reception signal, and carrying out eigenvalue decomposition on a product matrix obtained by multiplying a correlation matrix having the detected correlation as elements and a transported matrix of the correlation matrix together;

reception signal correction means (143) for correcting, according to the reception-signal-characteristics-correcting coefficient ($W_r$), at least one of a frequency characteristic and a spatial frequency characteristic of the reception signal; and

coefficient transmission means (148, 144, 140-142, 131-136) for transmitting the transmission-signal-characteristics-correcting coefficient ($W_t$) to the transmitter.

**28.** In a communication system employing a transmitter and a receiver, for carrying out signal processing adapted for transmission-channel characteristics, the receiver comprising:

coefficient computation means (147) for computing a reception-signal-characteristics-correcting coefficient ($W_r$) through the processes of detecting a correlation of a reception signal, and carrying out eigenvalue decomposition on a product matrix obtained by multiplying a correlation matrix having the detected correlation as elements and a transported matrix of the correlation matrix together; and

reception signal correction means (143) for correcting, according to the reception-signal-characteristics-correcting coefficient ($W_r$), at least one of a frequency characteristic and a spatial frequency characteristic of the reception signal.

**29.** In a communication system employing a transmitter and a receiver, for carrying out signal processing adapted for transmission-channel characteristics, the receiver comprising:

coefficient computation means (147) for computing a transmission-signal-characteristics-correcting coefficient ($W_t$) through the processes of detecting a correlation of a reception signal, and carrying out eigenvalue decomposition on a product matrix obtained by multiplying a correlation matrix having the detected correlation as elements and a transported matrix of the correlation matrix together.

**30.** The receiver of any one of claims 27 and 28, wherein:

the reception signal correction means (143) convolutes the reception signal with the reception-signal-characteristics-correcting coefficient ($W_r$).

**31.** The receiver of any one of claims 27 and 28, further comprising:

antenna elements (131-133); and

the reception signal correction means (143) carrying out, according to the reception-signal-characteristics-correcting coefficient ($W_r$), weight and add operations on each of signals received by the antenna elements (131-133).

**32.** The receiver of any one of claims 27 and 28, further comprising:

antenna elements (131-133); and

the reception signal correction means (143) changing, according to the reception-signal-characteristics-correcting coefficient ($W_r$), the frequency characteristics of signals received by the antenna elements (131-133) and adding the frequency-characteristic-changed signals to one another.

**33.** The receiver of any one of claims 27 to 29, further comprising:

antenna elements (131-133);

training signal storage means for storing the same training signals ($b_i$) as those stored in the transmitter: and

the coefficient computation means (147) for computing the transmission-signal-characteristics-correcting coefficient ($W_t$) and the reception-signal-characteristics-correcting coefficient ($W_r$) through the processes of finding correlation values between the training signals ($b_i$) and signals received by antenna elements (131-133), and carrying out eigenvalue decomposition on the product matrix obtained by multiplying the correlation matrix having the found correlation values as elements and the transported matrix of the correlation matrix together.

**34.** The receiver of any one of claims 27 to 29, further comprising:

antenna elements (131-133); and
the coefficient computation means (147) for computing the transmission-signal-characteristics-correcting coefficient ($W_t$) and the reception-signal-characteristics-correcting coefficient ($W_r$) through the processes of branching each of signals received by the antenna elements, finding correlation values between the training signals ($b_i$) and signals received by antenna elements (131-133), and carrying out eigenvalue decomposition on the product matrix obtained by multiplying the correlation matrix having the found correlation values as elements and the transported matrix of the correlation matrix together.

# FIG.1
## PRIOR ART

SIGNAL INPUT — 1001

TRANSMITTER — 1002

TRANSMISSION CHANNEL — 1003

RECEIVER — 1004

ADAPTIVE EQUALIZER — 1005

SIGNAL OUTPUT — 1006

# FIG.2
## PRIOR ART

1005

SIGNAL INPUT — 1007

T — 1008
T — 1009
T — 1010

1011
1012
1013
1014

1015

SIGNAL OUTPUT — 1016

ADAPTIVE CONTROLLER — 1017

## FIG.3
### PRIOR ART

TRANSMISSION INFORMATION INPUT 1020 → TRANSMITTER 1021 → 1022 ⟿ 1023

RECEIVER (2) 1025 · 1026 RECEIVER (1) · 1024

LEVEL COMPARATOR 1027 → 1028 → 1029 DEMODULATED SIGNAL OUTPUT

## FIG.4
### PRIOR ART

TRANSMISSION SIGNAL INPUT 1034 → TRANSMITTER 1035 → 1033 → H 1036 → 1041 ⟿ 1043

DEMODULATED SIGNAL OUTPUT 1031

LEVEL COMPARATOR 1040

RECEIVER (2) 1038

RECEIVER (1) 1039

H 1037 · 1042

H 1044

1032

RECEIVER 1045 → 1047 DEMODULATED SIGNAL OUTPUT

TRANSMITTER 1046 ← 1048 TRANSMISSION SIGNAL INPUT

EP 1 311 094 A2

FIG.5
PRIOR ART

TRANSMISSION
INFORMATION
INPUT

1051

TRANSMITTER
1052

1053

1058

FREQUENCY
CONVERTER
1054

1059
1055

FREQUENCY
CONVERTER

1060
1056

FREQUENCY
CONVERTER

1061
1057

FREQUENCY
CONVERTER

ADAPTIVE ARRAY
1062

DEMODULATOR
1063

1064

DEMODULATED
SIGNAL OUTPUT

FIG.6
PRIOR ART

1065
INPUT

1069

1066
INPUT

1070

1073

1074
OUTPUT

1067
INPUT

1071

1068
INPUT

1072

1075
ADAPTIVE
CONTROLLER

EP 1 311 094 A2

# FIG.7
## PRIOR ART

TAPPED DELAY LINE FILTER — 1077

RECEIVER — 1078

DEMODU-LATED SIGNAL OUTPUT — 1076

T — 1080

COEFFICIENT SETTER — 1081

1079

1082

TAPPED DELAY LINE FILTER — 1084

TRANSMITTER — 1083

1085

TRANSMISSION INFORMATION INPUT

1086

1093

RECEIVER — 1087

TAPPED DELAY LINE FILTER — 1088

DEMODU-LATED SIGNAL OUTPUT — 1089

1091 — T

COEFFICIENT COMPUTATION UNIT — 1090

1092 — T

TRANSMITTER — 1095

TAPPED DELAY LINE FILTER — 1094

EP 1 311 094 A2

# FIG.8
## PRIOR ART

1100  1101  1102  1103

SIGNAL
INPUT

1104  1105  1106  1107

1110

COEFFICIENT
INPUT

1108

1109

SIGNAL
OUTPUT

# FIG.9

1  2  3  4  5

Wt

TRANSMISSION
CHANNEL

Wr

Wt,Wrcalc  6

25

FIG.10

EP 1 311 094 A2

FIG.11

FIG.12

DEMODULATED SIGNAL OUTPUT — 151

DEMODU-LATOR — 152

ADAPTIVE ARRAY — 153

DESPREAD-ING (1) — 154, 155, 156

DESPREAD-ING (2)

DESPREAD-ING (3)

FREQUENCY CONVERTER — 157

FREQUENCY CONVERTER — 158

FREQUENCY CONVERTER

H — 163

166

H — 159

164

H — 165

167

H

168

COEFFICIENT SETTER

175 — T

176

SIGNAL INPUT — 174

MODU-LATOR — 173

TRANSMISSION BEAM FORMING UNIT — 172

SPREAD-ING (3)

SPREAD-ING (2)

SPREAD-ING (1)

170

171

169

FREQUENCY CONVERTER

FREQUENCY CONVERTER — 160, 161

FREQUENCY CONVERTER — 162

181 — 184

182 — 185

183

H — 188

H

H — 186

189

FREQUENCY CONVERTER — 187

FREQUENCY CONVERTER

FREQUENCY CONVERTER

DESPREAD-ING (1) — 193, 195

DESPREAD-ING (2) — 194

DESPREAD-ING (3)

ADAPTIVE ARRAY — 196

DEMODU-LATOR — 197

DEMODULATED SIGNAL OUTPUT — 198

T — 199

COEFFICIENT COMPUTATION UNIT — 201

T — 200

MODU-LATOR — 202

TRANSMISSION BEAM FORMING UNIT — 203

FREQUENCY CONVERTER

FREQUENCY CONVERTER — 190

FREQUENCY CONVERTER — 191, 192

SPREAD-ING (3)

SPREAD-ING (2)

SPREAD-ING (1)

204 — 206 — 205

# FIG.13

EP 1 311 094 A2

# FIG.14

# FIG.15